# EUROPEAN PATENT APPLICATION

(11) **EP 3 653 481 A1**
(43) Date of publication of application: **20.05.2020**
(21) Application number: 19150722.7
(22) Date of filing: 08.01.2019
(51) Int. Cl.: B62M 6/90, B60K 1/04

(54) **HYBRID BATTERY HOLDER AND VEHICLE FRAME ASSEMBLY**

(30) Priority: 13.11.2018 CN 201813440370
(71) Applicant: Kunshan Shanshan Plastic Science-Technology Co. Ltd., 215333 Kunshan Jiangsu Province (CN)
(72) Inventor: NI, Jin, KUNSHAN, JIANGSU PROVINCE 215333 (CN)
(74) Representative: Cabinet Chaillot

(57) **Abstract**

The present invention discloses a hybrid battery holder and vehicle frame set, comprising a battery set, a battery connector, a battery mounting block, a battery mounting base, and a frame load-bearing tube fitting. In the present invention, the battery mounting block for fixing the battery set and vehicle load bearing tube fitting which forms a highly rigid structure with the rest parts on the vehicle are designed to be two individual parts, as a consequence, it is only necessary to consider the rigidity of the vehicle structure instead of the effect on the height of the vehicle load bearing tube fitting after inserting the battery set, material selection is greatly facilitated. In the meantime, with the vehicle load-bearing tube fitting which coordinates with the rest components on the vehicle frame to form a highly rigid structure the vehicle structure can be simplified to a great extent, and all of the battery mounting base, the battery mounting block and the battery connector can be massively fabricated with molds.

## Description

### Technical Field

The present invention relates to a frame, particularly to a hybrid battery holder and vehicle frame assembly for bearing the battery holder.

### Background Art

The battery system on the bicycle is mostly used for the components like lights, but in recent years another kind of products has quietly entered the market, that is, a bicycle with an auxiliary motor, or battery vehicle driven by electromotor only. These vehicles are equipped with an electromotor to assist riders so that relatively less muscular power is used to pedal the bicycle, or the bicycle is driven only with an electromotor. These vehicles are generally equipped with a battery system comprising one or more battery packs and the battery pack(s) can be arranged in various parts of the vehicle. In China, this kind of moped or electric vehicle has become an easy and frequently used transportation tool, and the market thereof is huge. And modern battery technology has made it even more attractive than it used to be, but in fact, it still looks like common bicycles configured with relatively large and bulky battery packs.

In order to fulfill the consumers' desire for a perfect solution, a number of variations have emerged, wherein the battery pack is integrally configured in the frame, either in a compartment configured for the battery pack, or directly configured as a part of the frame, and can be disassembled for charging or replacement. Since the bicycles are often parked in train stations and on the streets, it is more important that the battery pack can be disassembled and carried by consumers with ease and can be charged when not in use, otherwise it may be easily removed from the bicycle without the user's consent.

One of the existing bicycle frame and battery assembling ways is to make the frame a multiple mold cavity one and destroy some of them to put the battery pack in. Such design means extra steps in the production process, which is not conducive to low cost mass production by molding. At present, there isn' t any kind of hybrid battery holder and vehicle frame assembly which is convenient for mass production by molding.

### Summary of the Invention

The present invention aims at the technical issues described above and provides a hybrid battery holder and vehicle frame assembly, convenient for mass production by molds.

The present invention achieves the objective above through technical solutions as follow:
A hybrid battery holder and vehicle frame assembly comprises a battery set, a battery connector, a battery mounting block, a battery mounting base, and a frame load-bearing tube fitting, wherein the battery set is connected to the vehicle electrical system through the battery connector, the battery set is installed in the battery mounting base through the battery mounting block, the battery mounting base is provided with an open cavity, the battery mounting block and the battery connector are disposed in the open cavity of the battery mounting base, the battery mounting base is set on the frame load-bearing tube fitting, the frame load-bearing tube fitting combines with the rest components on the frame like upper fork, bottom fork, middle tube and head tube to form a highly rigid structure for bearing vehicle loads and the battery set is installed on the battery mounting base through the battery mounting block and the battery connector.

According to an embodiment, the section of the battery mounting base and the section of the vehicle load-bearing tube fitting match each other.

According to an embodiment, the frame load-bearing tube fitting is a mold cavity tube.

According to an embodiment, the frame load-bearing tube fitting is a single mold cavity or tube with multiple mold cavities.

According to an embodiment, the battery mounting block and the battery connector are of one-piece design.

According to an embodiment, the battery mounting block and the battery connector are embedded integrally in the mold cavity on the battery mounting base.

According to an embodiment, the battery set and the battery mounting base match each other and are made into a shape of tube.

According to an embodiment, the battery mounting base, the battery mounting block, the battery connector and the frame load-bearing tube fitting are bolt connected.

In the present invention, the battery mounting base for fitting battery set and the vehicle load-bearing tube fitting for combining with the rest components on the frame to form a high-rigidity structure are made as two independent parts so that only rigidity after integration instead of the impact of inserted battery on the height of the vehicle load-bearing tube fitting shall be considered when preparing the vehicle load-bearing tube fitting, which thereby greatly facilitates the material selection. In the meantime, the structure of vehicle load-bearing tube fitting for combining with the rest components on the frame to form a high-rigidity structure is greatly simplified, and all of the battery mounting base, the battery mounting block and the battery connector can be massively fabricated with molds.

### Brief Description of the Drawings

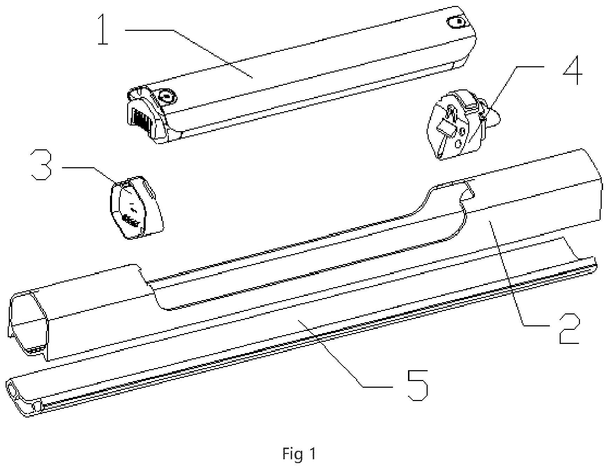

FIG. 1 is a schematic diagram of the present invention, in which the text markups shown in the figures are indicated as follows: 1-battery set, 2-battery connector, 3-battery mounting block, 4-battery mounting base, and 5- frame load-bearing tube fitting.

### Specific Embodiments

The following is a clear and complete description of the technical solutions in the embodiment of the present invention, combined with the attached figures. Apparently, the embodiments described are just a part of the embodiments of the present invention, not all of the embodiments. Based on the embodiments of the present invention, all other embodiments obtained by ordinary technicians in the field without making any creative works shall fall within the scope of protection of the invention.

A hybrid battery holder and vehicle frame assembly comprises a battery set 1, a battery connector 2, a battery mounting block 3, a battery mounting base 4, and a frame load-bearing tube fitting 5, wherein the battery set 1 is connected to the vehicle electrical system through the battery connector 2, the battery set 1 is installed in the battery mounting base 4 through the battery mounting block 3, the battery mounting base 4 is provided with an open cavity, the battery mounting block 3 and the battery connector 2 are disposed in the said open cavity of the battery mounting base 4, the battery base 4 is disposed on the frame load-bearing tube fitting 5. The said frame load-bearing fitting 5 combines with the rest components on the frame like upper fork, bottom fork, middle tube and head tube to form a high-rigidity structure to bear the vehicle loads and the battery set 1 is installed on the battery mounting base 4 through the battery mounting block 3 and the battery connector 2; sections of both the battery mounting base 4 and the vehicle load-bearing tube fitting 5 match each other; the frame load-bearing tube fitting 5 is a mold cavity tube, and is a single mold cavity or multiple mold cavity tube; the battery mounting block 3 and the battery connector 2 are of one-piece design; the battery mounting block 3 and the battery connector 2 are embedded integrally in the cavity on the battery mounting base 4; the battery set 1 and the battery mounting base 4 match each other and are made into a shape of tube; and the battery mounting base 4 and the frame load-bearing tube fitting 5 are bolt connected.

In the present invention, the battery mounting base 4 for fitting battery set 1 and the vehicle load-bearing tube fitting 5 for combining with the rest components on the frame to form a highly rigid structure are made to be two independent parts so that only strength of the assembled structure rather than the impact of inserted battery on the height of the vehicle load-bearing tube fitting shall be taken into consideration when preparing the vehicle load-bearing tube fitting, which thereby greatly facilitates the material selection. In the meantime, the vehicle load-bearing tube fitting 5 for combining with the rest components on the frame to form a high-rigidity structure greatly simplifies the structure, and the battery mounting base 4, the battery mounting block 3 and the battery connector 2 all can be massively manufactured with molds.

For the technicians in the field, apparently the present invention is not limited to the details of the embodiments above and the present invention can be achieved in other specific way without deviating from the spirit or basic features of the present invention. Therefore, no matter from which point of the view, the embodiments shall be exemplary and non-restrictive, the scope of the present invention shall be defined by the attached claims not the description above. It is therefore intended to include in the present invention all changes falling within the meaning and scope of the equivalent elements of the claims. Any drawing mark in the claims shall not be deemed to limit the claim in question.

In addition, it should be understood that though the specification is described in terms of embodiments, not every embodiment contains one independent technical solution. This description of the specification is only for the sake of clarity. The technicians in the field shall regard the specification as a whole, and the technical solutions in each embodiment may be appropriately combined to form other embodiments understandable to the technicians in the field.

## Claims

1. A hybrid battery holder and vehicle frame assembly comprising a battery set (1), a battery connector (2), a battery mounting block (3), a battery mounting base (4), and a frame load-bearing tube fitting (5), wherein the battery set (1) is connected to the vehicle electrical system through the battery connector (2), the battery set (1) is installed in the battery mounting base (4) through the battery mounting block (3), the battery mounting base (4) is provided with an open cavity, the battery mounting block (3) and the battery connector (2) are disposed in the open cavity of the battery mounting base (4), the battery mounting base (4) is set on the frame load-bearing tube fitting (5), the frame load-bearing tube fitting (5) combines with the rest components on the frame like upper fork, bottom fork, middle tube and head tube to form a highly rigid structure for bearing vehicle loads and the battery set is installed on the battery mounting base through the battery mounting block and the battery connector.

2. The hybrid battery holder and vehicle frame assembly in accordance with the claim 1, wherein the section of the battery mounting base (4) and that of the frame load-bearing tube fitting (5) match each other.

3. The hybrid battery holder and vehicle frame assembly in accordance with the claim 1, wherein the frame load-bearing tube fitting (5) is a mold cavity tube.

4. The hybrid battery holder and vehicle frame assembly in accordance with the claim 1, wherein the frame load-bearing tube fitting (5) is a single mold cavity or tube with multiple mold cavities.

5. The hybrid battery holder and vehicle frame assembly in accordance with the claim 1, wherein the battery mounting block (3) and the battery connector (2) are of one-piece design.

6. The hybrid battery holder and vehicle frame assembly in accordance with the claim 1, wherein the battery mounting block (3) and the battery connector (2) are embedded integrally in the mold cavity on the battery mounting base.

7. The hybrid battery holder and vehicle frame assembly in accordance with the claim 1, wherein the battery set (1) and the battery mounting base (4) match each other and are made to be tube shaped.

8. The hybrid battery holder and vehicle frame assembly in accordance with the claim 1, wherein the battery mounting base (4), the battery mounting block (3) and the battery connector (2) and the frame load-bearing tube fitting (5) are bolt connected.
